Europäisches Patentamt

European Patent Office

Office européen des brevets

(19)

(11) Veröffentlichungsnummer : **0 173 815**
**B1**

(12) **EUROPÄISCHE PATENTSCHRIFT**

(45) Veröffentlichungstag der Patentschrift :
24.01.90

(51) Int. Cl.$^5$ : **G 06 K 11/06**

(21) Anmeldenummer : 85108174.5

(22) Anmeldetag : 02.07.85

(54) Eingabeeinrichtung zum Unterstützen des Konstruierens an elektronisch gesteuerten Ausgabegeräten.

(30) Priorität : 30.07.84 DE 3428045

(43) Veröffentlichungstag der Anmeldung :
12.03.86 Patentblatt 86/11

(45) Bekanntmachung des Hinweises auf die Patenterteilung : 24.01.90 Patentblatt 90/04

(84) Benannte Vertragsstaaten :
AT BE CH DE FR GB IT LI LU NL SE

(56) Entgegenhaltungen :
EP–A– 0 085 960
EP–A– 0 094 737
US–A– 4 242 804
US–A– 4 244 105
US–A– 4 246 703
PATENTS ABSTRACTS OF JAPAN, Band 8, Nr. 75 (P-266)(1512), 7. April 1984; & JP - A - 58 219 688 (TOPPAN INSATSU K.K.) 21.12.1983

(73) Patentinhaber : **Eichholz, Willi**
**Haydnstrasse 9**
**D-4010 Hilden (DE)**

(72) Erfinder : **Eichholz, Willi**
**Haydnstrasse 9**
**D-4010 Hilden (DE)**

(74) Vertreter : **Gille, Christian, Dipl.-Ing. et al**
**Türk, Gille + Hrabal Patentanwälte Bruckner Strasse 20**
**D-4000 Düsseldorf 13 (DE)**

## Beschreibung

Die Erfindung betrifft eine Eingabeeinrichtung zum Unterstützen des Konstruierens an elektronisch gesteuerten Ausgabegeräten, beispielsweise am Bildschirm, am Plotter oder dergleichen, mit einem manuell bedienbaren Rad zur elektronischen Wegeerfassung in einer ersten Bewegungsrichtung und mit einer Vorrichtung zum elektronischen Erfassen einer Winkelgröße.

Ein Konstrukteur arbeitet ergonomisch optimal, wenn er Werkzeuge wie Zeichenkopf, Lineal und Zirkel benutzt. Jedoch ist es heutzutage auch aus Kostengründen erforderlich, die Weiterverarbeitung von einmal entworfenen Zeichnungen einer Rechenanlage zu überlassen. Dazu müssen dem Rechner die Informationen über die Zeichnung, nämlich Winkellage, Lage von Punkten, Lage und Länge von Linien, Lage und Radius von Kreisen, digital und numerisch übermittelt werden. Solche digitalen und numerischen Informationen werden vom am Rechner selbst zur Verfügung gestellten Einrichtungen, nämlich Tastatur, Steuerknüppel, Rollkugel, Digitalisierbrett, Lichtgriffel usw. geliefert, jedoch bilden diese Hilfsmittel kein Äquivalent für die natürlichen Werkzeuge des Konstrukteurs.

Um eine analoge Information über die Länge einer Strecke zu digitalisieren, lehrt die US-A 4 244 705, ein erstes Dreieck mit einer vertikal liegenden geraden Kante und ein zweites Dreieck mit einer horizontal liegenden geraden Kante zu verwenden, die mechanisch miteinander verbunden sind und von einem Bedienboard unabhängig voneinander verschoben werden können. Dabei ist mit dem ersten Dreieck eine Vorrichtung zum Anzeigen der linearen Verschiebung des ersten Dreieckes verbunden, das die entsprechende Länge als digitale Information auf einer am Bedienboard vorgesehenen Anzeige ausgibt. Ebenso wird die vertikale Verschiebung des zweiten Dreieckes als digitale Information auf dem Bedienboard angezeigt. Diese Vorrichtung kann dazu verwendet werden, Linien an verschiedenen Positionen des Zeichenbrettes zu zeichnen, ohne daß mit einem Lineal oder dergleichen eine vorbestimmte Entfernung abgemessen werden müßte. Jedoch ist diese Vorrichtung sehr unflexibel, da mit ihr nur aus rechtwinklig oder parallel zueinander verlaufenden Linien bestehende Figuren gezeichnet werden können.

In der US-A 4 246 703 ist ein elektronisches Zeicheninstrument offenbart, das seine eigene lineare Verschiebung mißt und jedes gewünschte Vielfache oder jeden Bruchteil dieser tatsächlichen Verschiebung anzeigt. Dieses Zeicheninstrument ist besonders dann vorteilhaft einsetzbar, wenn Vergrößerungen oder Verkleinerungen von Zeichnungen vorgenommen werden sollen. Jedoch muß dieses Zeicheninstrument immer neu angesetzt werden, wenn von parallelen oder rechtwinklig zueinander verlaufenden Linien zu Linien übergegangen wird, die unter einem beliebigen Winkel zu anderen Linien der Zeichnung stehen. Für komplexere Zeichnungen ist dieses Zeicheninstrument daher nur beschränkt einsetzbar.

In der US-A 4 242 804 wird eine Eingabeeinrichtung beschrieben, die auch in der Lage ist, Winkelgrößen und Bewegungen um einen bestimmten Winkelbetrag zu erfassen. Bei dieser Eingabeeinrichtung ist ein einziger Signalgeber zur Übermittlung von Winkelstellung und der Länge gerade Linien vorgesehen. Mit dieser Eingabeeinrichtung können daher beliebige Bewegungen auf der Zeichenfläche erfaßt werden. Bei einer in der US-A 4 242 804 beschriebenen Eingabeeinrichtung sind aber die Bewegungen in X- und Y-Richtung wegen der Verwendung nur eines Signalgebers mechanisch nicht exakt zu trennen. Wesentliche Eigenschaften, die beim Konstruieren unbedingt erforderlich vorhanden sein müssen, können so mit der bekannten Eingabeeinrichtung nicht realisiert werden. Insbesondere ist es nicht möglich, dem Konstrukteur das gewohnte analoge Arbeiten in exakter Weise unterstützend zu erleichtern.

Aufgabe der Erfindung ist es, eine Eingabeeinrichtung der eingangs genannten Gattung zu schaffen, mit der ein Konstrukteur seine Konstruktionszeichnung analog, d. h. wie mit konventionellen Handwerkszeugen, in einen Rechner eingeben kann.

Diese Aufgabe wird von einer Eingabeeinrichtung mit den Merkmalen des Anspruches 1 gelöst. Vorteilhafte Ausgestaltungen ergeben sich aus den Kennzeichen der Unteransprüche.

Bei der neuen Eingabeeinrichtung ist als Vorrichtung zum elektronischen Erfassen der Winkelgröße eine Drehscheibe vorgesehen, weiterhin ein zweites Rad zur elektronischen Wegeerfassung in der Bewegungsrichtung zur ersten Bewegungsrichtung, wobei sowohl das erste Rad als auch das zweite Rad in der Drehscheibe und mit dieser elektronisch gekoppelt angeordnet sind.

Vorteilhaft ist jedes Rad ein Rändelrad.

Die Bauelemente der Eingabeeinrichtung sind durch den Einbau der Rändelräder in die Drehscheibe optimal realisiert, jedoch können diese Bauelemente auch einzeln angeordnet sein und kinematisch miteinander verknüpft sein.

Zum ergonomisch optimalen Betätigungen kleiner Verstellwege an den Rändelrädern sind diese mit einer mechanischen Rasterung versehen, ähnlich den elektronischen Handrädern an Werkzeugmaschinen, bei denen auch eine Identität von mechanischen und elektronischen Inkrementen besteht.

Die Linienzüge werden in einem analog zur Handbewegung vorhandenen Modus, dem Track-Mode nach dem sogenannten Gummibandprinzip gebildet.

Die von der Eingabeeinrichtung umgesetzte Information wird an einen Rechner gegeben und kann beispielsweise auf dem Bildschirm gezeigt werden. Beim Drehen der Rändelräder ergibt sich dann ein analog dargestellter Graphik-Aufbau am Bildschirm.

Es können an der Einrichtung Steuertasten vorgesehen sein, mit denen ein Cursor oder ein Fadenkreuz für sich allein verschoben werden können, es kann auch die Möglichkeit vorgesehen sein, daß sie eine Linie hinter sich bilden.

Bei einer Verdrehung der Drehscheibe erscheint dann die erzeugte Kraft in der entsprechenden Winkelstellung.

Werden zunächst der Mittelpunkt und ein Umfangspunkt eines Kreises mit dem Cursor festgelegt, kann durch Drehen der Drehscheibe wie mit einem Zirkel ein Kreisbogen geschlagen werden.

Im folgenden soll die Erfindung lediglich beispielhaft anhand der Zeichnung erläutert werden.

Es zeigt

Fig. 1 eine Draufsicht auf eine Eingabeeinrichtung gemäß der vorliegenden Erfindung,

Fig. 2 eine Schnitt durch die Eingabeeinrichtung aus Fig. 1 und

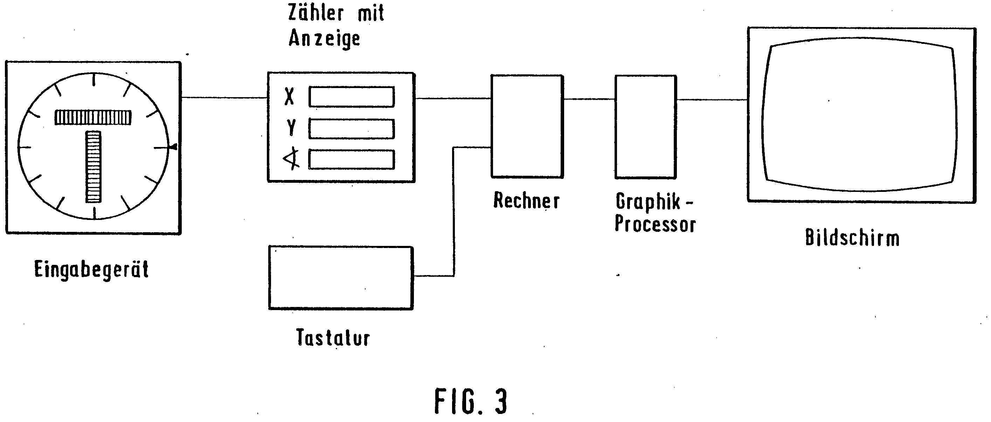

Fig. 3 eine schaubildliche Ansicht, die das Zusammenwirken der Eingabeeinrichtung mit anderen elektronischen Komponenten dargestellt.

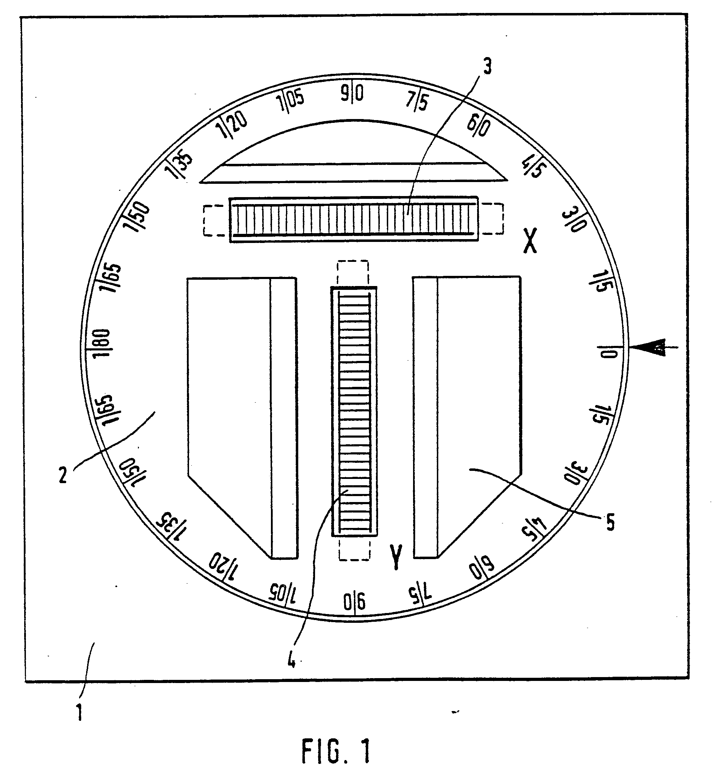

Fig. 1 zeigt ein Gehäuse (1), in dem eine Drehscheibe (2) gelagert ist. In dieser Drehscheibe (2) sind Rändelräder (3, 4) ebenfalls drehbar gelagert. Die auf der Drehscheibe (2) angebrachten Griffstücke (5) erleichtern die ergonomische Handhabung dieser Einrichtung.

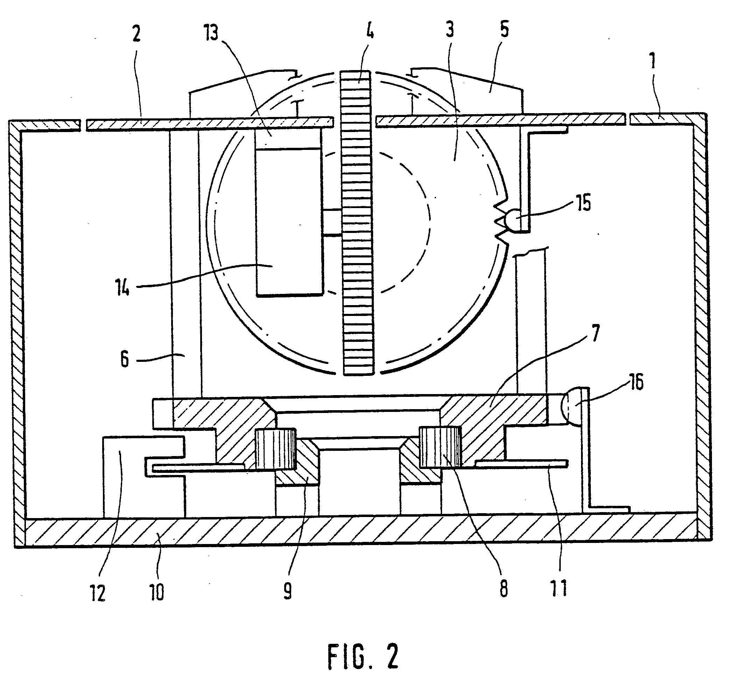

Fig. 2 zeigt einen schnitt durch die erfindungsgemäße Eingabeeinrichtung. Die Drehscheibe (2) ist über Bolzen (6) und einer Rastscheibe (7) fest verbunden. Diese Rastscheibe (7) ist über ein Wälzlager (8) und einen Zwischenring (9) drehbar auf einer Grundplatte (10) befestigt. Ein an der Rastscheibe (7) angebrachte Impulsgeberscheibe (11) wird optoelektronisch von einer Gabellichtschranke (12) abgetastet. Die Rändelräder (3) sind in Gehäusen (14) drehbar gelagert. über ein Anschlußteil (13) sind sie jeweils mit der Drehscheibe (2) verbunden. In diesem Gehäuse kann zum Beispiel auch ein Impulsgeber angeordnet sein. Die Verzahnung der Rändelräder (3, 4) kann zum Beispiel auch über Kabellichtschranken abgetastet werden. Die mechanische Rasterung der Rändelräder (3, 4) und der Rastscheibe (7) erfolgt durch elastisch angeordnete Rastkuppen (15, 16). Durch in den Ring (9) eingearbeitete Aussparungen können über Kabellitzen die elektronischen Signale der Rändelräder (3, 4) und der Rastscheibe (7) aus der Einrichtung hinausgeführt werden.

Die Drehachsen der Rändelräder (3, 4) liegen senkrecht zur Drehachse der Drehscheibe (2), es ist jedoch auch denkbar, alle Drehachsen parallel zueinander anzuordnen.

Neben den hier dargestellten Rädern sind als Linealersatz auch noch andere rotatorische oder translatorische Prinzipien möglich. So kann zum Beispiel auch das Prinzip des Digitalisiertabletts zurückgegriffen werden und beispielsweise über streifenförmiges feste oder bewegliche Bauelemente mit Hand gefahren werden.

Nicht dargestellt sind die ergänzenden Möglichkeiten bekannter Zeichenköpfe.

## Patentansprüche

1. Eingabeeinrichtung zum Unterstützen des Konstruierens an elektronisch gesteuerten Ausgabegeräten, mit einem manuell bedienbaren Rad zur elektronischen Wegeerfassung in einer ersten Bewegungsrichtung und mit einer Vorrichtung zum elektronischen Erfassen einer Winkelgröße, dadurch gekennzeichnet, daß die Vorrichtung zum elektronischen Erfassen einer Winkelgröße eine Drehscheibe (2) ist und daß ein zweites Rad (4) zur elektronischen Wegeerfassung in der Bewegungsrichtung senkrecht zur ersten Bewegungsrichtung vorgesehen ist, wobei sowohl das erste Rad (3) als auch das zweite Rad (4) in der Drehscheibe (2) und mit dieser elektronisch gekoppelt angeordnet sind.

2. Eingabeeinrichtung nach Anspruch 1, dadurch gekennzeichnet, daß jedes Rad (3, 4) ein Rändelrad ist.

3. Eingabeeinrichtung nach Anspruch 1 oder 2, dadurch gekennzeichnet, daß die Drehachsen der Räder (3, 4) senkrecht zur Drehachse der Drehscheibe (2) angeordnet sind.

4. Eingabeeinrichtung nach Anspruch 1 oder 2, dadurch gekennzeichnet, daß die Drehachsen der Räder (3, 4) parallel zur Drehachse der Drehscheibe (2) angeordnet sind.

5. Eingabeeinrichtung nach einem der Ansprüche 1 bis 4, dadurch gekennzeichnet, daß die Drehscheibe (2) mit einer optoelektronisch abtastbaren Impulsgeberscheibe (11) gekoppelt ist.

## Claims

1. An input device for assisting design on electronically controlled output devices, having a manually controllable wheel for measuring electronically a distance in a first moving direction and having a device for electronically measuring an angular quantity, characterized in that said device for electronically measuring an angular quantity is a turntable (2) and that a second wheel (4) is provided for electronically measuring the distance in a moving direction perpendicular to said first moving direction, said first wheel (3) as well as said second wheel (4) being arranged within said turntable (2) and electronically coupled thereto.

2. A device as claimed in claim 1, characterized in that each wheel (3, 4) is a knurl.

3. A device as claimed in Claims 1 or 2, characterized in that the rotating axis of wheels (3, 4) are arranged perpendicular to the rotating axis of turntable (2).

4. A device according to claims 1 or 2, characterized in that the rotating axis of wheels (3, 4) are arranged in parallel to the rotating axis of turntable (2).

5. A device as claimed in one of the claims 1 to 4, characterized in that that turntable (2) is coupled to an optoelectronically scannable pulse generator disk (11).

## Revendications

1. Dispositif d'entrée pour assister à la construction sur des appareils de sortie commandés électroniquement, comprenant une roue opérable à la main pour saisir électroniquement une première direction de mouvement et comprenant un dispositif pour saisir électroniquement une valeur angulaire, caractérisé en ce que le dispositif pour saisir électroniquement une valeur angulaire est une tourne-table (2) et que une autre roue (4) est prévue pour saisir électroniquement la distance dans la direction de mouvement perpendiculaire à la première direction de mouvement, la première roue (3) et la deuxième roue (4) sont arrangées dans la tourne-table (2) et sont couplées électroniquement avec laquelle.

2. Dispositif selon revendication 1, caractérisé en ce que chaque roue (3, 4) est une molette.

3. Dispositif selon revendication 1 ou 2, caractérisé en ce que les axes de rotation des roues (3, 4) sont arrangées perpendiculairement à l'axe de rotation de la tourne-table (2).

4. Dispositif selon revendication 1 ou 2, caractérisé en ce que les axes de rotation des roues h(3, 4) sont arrangées parallèlement à l'axe de rotation de la tourne-table (2).

5. Dispositif selon une des revendications 1 à 4, caractérisé en ce que la tourne-table (2) est couplée avec une disque générant des impulsions lisable optoélectroniquement (11).

FIG. 1

FIG. 2

Zähler mit
Anzeige

X

Y

∢

Rechner

Graphik-
Processor

Bildschirm

Eingabegerät

Tastatur

FIG. 3

EP 0 173 815 B1